# EUROPÄISCHE PATENTANMELDUNG

(11) **EP 1 107 162 A1**
(43) Veröffentlichungstag der Anmeldung: **13.06.2001**
(21) Anmeldenummer: 99124537.4
(22) Anmeldetag: 09.12.1999
(51) Int. Cl.: G06K 7/00

(54) **Verfahren zur Datenübertragung mit Laufzeitmessung zur Selektion von Empfangsdaten**

(71) Anmelder: SIEMENS AKTIENGESELLSCHAFT, 80333 München (DE)
(72) Erfinder: Schiefer, Martin, 3100 St. Pölten (AT); Konrad, Wolfgang, 2340 Mödling (AT); Veith, Peter Ernst, 1190 Wien (AT)

(57) **Zusammenfassung**

Die Erfindung betrifft ein Verfahren zur Datenübertragung zwischen mindestens einem Schreib-Lese-Gerät (SLG) und mindestens einem mobilen Datenspeicher (MDS) in einem Identifikationssystem mit mindestens einem an Objekten angebrachten mobilen Datenspeicher (MDS) zur Erfassung von objektbezogenen Zustands- und/oder Prozeßdaten z.B. in einem Versand-, Transport- und/oder Fertigungssystem der einzelnen Objekte, wobei ein Laufzeitunterschied zwischen empfangenen Datensignalen eines mobilen Datenspeichers (MDS) und ausgesendeten Datensignalen des Schreib-Lese-Geräts (SLG) im Schreib-Lese-Gerät (SLG) ermittelt wird und die empfangenen Datensignale des mobilen Datenspeichers (MDS) im Schreib-Lese-Gerät (SLG) nur dann weiterverarbeitet werden, wenn der ermittelte Laufzeitunterschied eine vorgegebene Laufzeitgrenze unterschreitet.

## Beschreibung

Verfahren zur Datenübertragung zwischen mindestens einem Schreib-Lese-Gerät (SLG) und mindestens einem mobilen Datenspeicher (MDS) in einem Identifikationssystem mit Laufzeitmessung zur Selektion von Empfangsdaten

Die Erfindung betrifft ein Verfahren zur Datenübertragung mit den Merkmalen des Oberbegriffs des Patentanspruchs 1.

Als Stand der Technik sind Identifikationssysteme bekannt, die zumindest ein stationäres Schreib-Lese-Gerät (SLG) enthalten, welches Daten mit mobilen Datenträgern über eine in der Regel auf Funk basierender Datenübertragungsstrecke berührungslos austauscht. Derartige Systeme werden in technischen Einrichtungen eingesetzt, wo eine Vielzahl von Objekten bzw. Gütern möglichst schnell und frei zumindest bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr. Dabei ist es in aller Regel erforderlich, an bestimmten Stellen der Einrichtung, z.B. einer Fertigungsanlage, etwa die Art und den Zustand der in einer räumlichen Nähe zu diesen Stellen aktuell befindlichen Objekte schnell und ungehindert zu erfassen. Hierzu werden einerseits die Objekte mit mobilen Datenspeichern versehen, welche z.B. die Art und den aktuellen Zustand des Objektes kennzeichnende Daten enthalten. Andererseits sind an den bestimmten Stellen der Einrichtung Schreib-Lese-Geräte plaziert und häufig mit zentralen Datenverarbeitungseinrichtungen verbunden.

Werden z.B. in einem Produktionsablauf solche Objekte in die räumliche Nähe einer ausgewählten Stelle befördert, so kann das dort angeordnete, stationäre Schreib-Lese-Gerät auf berührungslose Weise die Daten in den mobilen Datenspeichern der in ihrem Erfassungsbereich aktuell befindlichen Objekte erfassen und gegebenenfalls verändern. Die Daten können dann mit Hilfe einer übergeordneten zentralen Datenverarbeitungseinrichtung zu unterschiedlichen Zwecken ausgewertet werden, z.B. zur Verfolgung des Laufes der mit den mobilen Datenspeichern versehenen Objekte und zur davon abhängigen Steuerung von Betriebsmitteln der jeweiligen technischen Einrichtung.

In technischen Einrichtungen werden die mit mobilen Datenspeichern versehenen Objekte bzw. Güter in der Regel mit Hilfe von technischen Transportmitteln wie z.B. Förderbändern auf fest vorgegebenen Bahnen bewegt. Diese Transportmittel können eng aneinander bzw. übereinander liegend oder parallel verlaufen. Zur Erfassung des Flusses der Objekte auf den jeweiligen Bahnen können diesen Schreib-Lese-Geräte zugeordnet sein. Diese haben meist zur Überwachung und Steuerung des Objektflusses die Aufgabe, Daten mit den mobilen Datenspeichern an denjenigen Objekten auszutauschen, welche auf der zugeordneten Bahn bzw. dem zugeordneten Transportmittel gefördert werden.

Dabei kann das Problem auftreten, daß von einem Schreib-Lese-Gerät versehentlich Daten mit einem mobilen Datenspeicher an einem Objekt ausgetauscht werden, welches auf einer nicht zugeordneten, aber räumlichen benachbarten Bahn bewegt wird. Die Ursachen hierfür können vielfältig sein und z.B. in ungünstigen maschinenbaulichen Anordnungen, überreichweiten, Reflexionseffekten und Positionsschwankungen der einzelnen Objekte auf der jeweiligen Bewegungsbahn liegen. Beim Einsatz von mobilen Datenspeichern z.B. zur Steuerung und Verfolgung von Gütern ist es somit in vielen Fällen zur Vermeidung von Fehlkommunikationen erforderlich, den Ort zugeordneter mobiler Datenspeichern eingrenzen zu können.

Zur Vermeidung derartiger Fehlkommunikationen sind unterschiedliche Methoden bekannt.

Bei einer ersten Methode wird hierzu der Erfassungsbereich bzw. die Kommunikationsreichweite der Schreib-Lese-Geräte eingeschränkt. Eine unerwünschte Kommunikation mit mobilen Datenspeichern z.B. auf einem benachbarten Fließband kann damit zwar verhindert werden. In der Praxis hat aber eine derartige Begrenzung des Erfassungsbereichs auch eine starke Eingrenzung der Einsatzmöglichkeiten eines solchen Identifikationssystems zur Folge. Vielfach ist es in Praxis auf diese Weise auch nicht mit hinreichender Sicherheit möglich, eine Unterscheidung von mobilen Datenspeichern zu erreichen. Der Grund hierfür liegt einerseits an der Breite z.B. von Fließbändern. Diese erfordern auch ausreichende große Kommunikationsreichweite von Schreib-Lese-Geräten, um mit Sicherheit auch auf dem Förderband ungünstig plazierte und schnell aufeinander folgende Objekte und deren mobile Datenspeicher identifizieren zu können. Andererseits sind in Produktionsanlagen Förderbänder häufig so eng plaziert, daß ein Übersprechen der Kommunikationsreichweite von Schreib-Lese-Geräten an einem Förderband auf ein benachbartes Förderband kaum vermeidbar ist.

Bei einer zweiten Methode wird zwar die Kommunikationsreichweite der Schreib-Lese-Geräten nicht beschränkt. In den einzelnen mobilen Datenspeichern werden aber zusätzliche Statusinformationen vorrätig gehalten. Hierdurch kann erreicht werden, daß die Kommunikation zwischen einem Schreib-Lese-Gerät und mobilen Datenspeichern nur in einer festen Reihenfolge abläuft. Derartige mobile Datenspeicher sind aber nicht universell einsetzbar. Ferner sind trotzdem zusätzliche physikalische Maßnahme zum Schutz vor Überreichweiten erforderlich, insbesondere am Anfang eines Datenaustauschs.

Bei einer weiteren Methode wird die Kommunikationsreichweite von Schreib-Lese-Geräten ebenfalls nicht beschränkt. Durch eine Messung der Signalpegel der von mobilen Datenspeichern abgesendeten Datenströme wird eine Abschätzung von deren Entfernung von dem jeweiligen Schreib-Lese-Gerät vorgenommen.

Hiermit kann entschieden werden, ob ein Datenstrom von einem zugeordneten oder fremden mobilen Datenspeicher stammt. Dieses Verfahren hat aber den besonderen Nachteil, daß es in geschlossenen Räumen, wie z.B. in Fabrikhallen, d.h. bei sogenannten "indoor" Applikationen, nicht eingesetzt werden kann. Der Grund hierfür liegt darin, daß in Gebäuden aufgrund von Mehrfachreflexionen sehr starke Schwankungen in der Empfangsfeldstärke auftreten können. Eine Ermittlung der Reichweiten durch Auswertung von Signalpegeln ist daher mit einem zu großen Fehler behaftet.

Die Erfindung liegt die Aufgabe zugrunde, ein Verfahren zur Datenübertragung zwischen mindestens einem Schreib-Lese-Gerät (SLG) und mindestens einem mobilen Datenspeicher (MDS) anzugeben, mit dem die oben angegebenen Nachteile überwunden werden können.

Die Aufgabe wird durch die kennzeichnenden Merkmale des Patentanspruchs 1 gelöst. Vorteilhafte Verfahrensvarianten werden in den Unteransprüchen 2 - 10 beschrieben.

Das erfindungsgemäße Verfahren zur Datenübertragung basiert auf einer Laufzeitmessung der von mobilen Datenspeichern eines Identifikationssystems in Form von Funksignalen abgegebenen Datensignalen. Dabei wird zunächst vom Schreib-Lese-Gerät (SLG) ein Datensignal an mindestens einen mobilen Datenspeicher (MDS) ausgesendet.

In einem zweiten Schritt werden vom Schreib-Lese-Gerät (SLG) rückgesendete modulierte Datensignale von mindestens einem mobilen Datenspeicher (MDS) empfangen und es erfolgt eine Ermittlung des Laufzeitunterschieds zwischen dem jeweiligen empfangenen modulierten Datensignal des mobilen Datenspeichers (MDS) und dem ausgesendeten Datensignal des Schreib-Lese-Geräts (SLG).

Eine Verarbeitung des im Schreib-Lese-Gerät (SLG) empfangenen modulierten Datensignals des mobilen Datenspeichers (MDS) erfolgt, falls der im Schreib-Lese-Gerät (SLG) ermittelte Laufzeitunterschied eine vorgegebene Laufzeitgrenze unterschreitet.

Dabei wird der Laufzeitunterschied als Entscheidungskriterium zur Beurteilung der jeweiligen Entfernungen zwischen Schreib-Lese-Gerät (SLG) und jeweiligen mobilen Datenspeichern (MDS) verwendet.

In einer Verfahrensvariante werden vom Schreib-Lese-Gerät (SLG) unmodulierte Datensignale mit laufend veränderter Sendefrequenz an mindestens einen mobilen Datenspeicher (MDS) ausgesendet und wird im Schreib-Lese-Gerät (SLG) die Phasenverschiebung zwischen einem empfangenen modulierten Datensignal eines mobilen Datenspeichers (MDS) und dem gesendeten unmodulierten Datensignal (MDS) des Schreib-Lese-Geräts (SLG) festgestellt.

Gemäß einer weiteren alternativen Verfahrensvariante wird vom Schreib-Lese-Gerät (SLG) ein moduliertes Datensignal an mindestens einen mobilen Datenspeicher (MDS) ausgesendet und werden im Schreib-Lese-Gerät (SLG) Autokorrelationsfunktionen der gesendeten Datensignale des Schreib-Lese-Geräts (SLG) und der empfangenen Datensignale des mobilen Datenspeichers (MDS) gebildet.

Weitere Einzelheiten der einzelnen Verfahrensvarianten ergeben sich aus im folgenden näher erläuterten Ausführungsbeispielen sowie im Zusammenhang mit den Zeichnungsfiguren. Es zeigen:
- FIG 1: eine schematische Darstellung eines Schreib-Lese-Geräts (SLG) mit mobilen Datenspeichern (MDS 1 - 4) in unterschiedlichen Entfernungen sowie
- FIG 2: eine schematische Darstellung erfaßter und nicht erfaßten Datensignale von mobilen Datenspeichern (MDS).

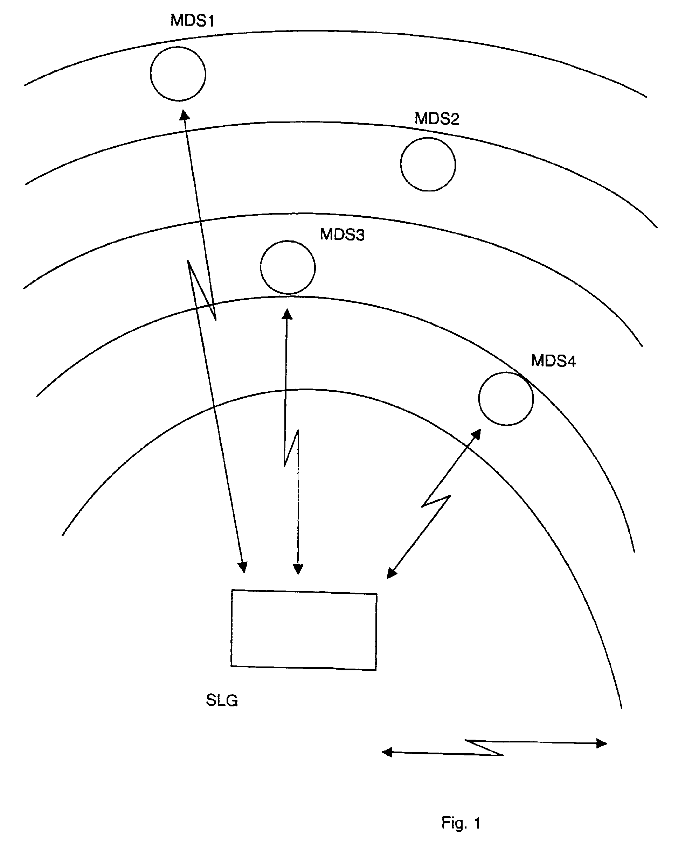

FIG 1 zeigt in unterschiedlichen Abständen vom Schreib-Lese-Gerät (SLG) angeordnete mobile Datenspeicher (MDS 1 - 4), welche mit dem Schreib-Lese-Gerät (SLG) zur Datenübertragung über Funksignale kommunizieren.

Das erfindungsgemäße Verfahren ermöglicht es, daß im Schreib-Lese-Gerät (SLG) rückgesendete Datensignale von mobilen Datenspeichern (MDS) nur dann empfangen und weiterverarbeitet werden, wenn sich die jeweiligen mobilen Datenspeicher (MDS) innerhalb eines vorgegebenen maximalen Abstands zum Schreib-Lese-Gerät (SLG) oder in einem vorgegebenen Entfernungsbereich zum Schreib-Lese-Gerät (SLG) befinden.

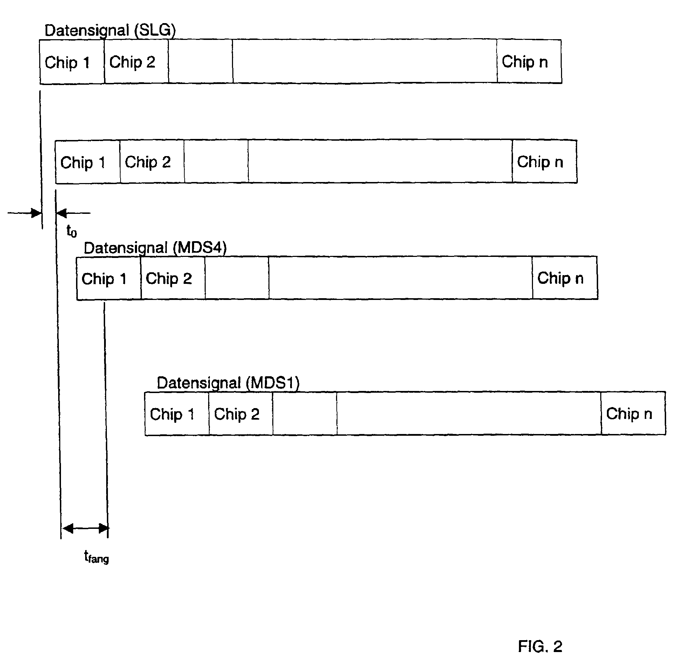

Gemäß einer ersten erfindungsgemäßen Verfahrensvariante werden vom Schreib-Lese-Gerät (SLG) modulierte Datensignale an die in der Umgebung befindlichen mobilen Datenspeicher (MDS) ausgesendet. Diese modulierten Datensignale des Schreib-Lese-Geräts (SLG) werden von mobilen Datenspeicher (MDS) empfangen, innerhalb der Bearbeitungszeit t₀ (vgl. FIG 2) verarbeitet. Dann wird ein moduliertes Datensignal vom jeweiligen mobilen Datenspeicher (MDS) an das Schreib-Lese-Gerät (SLG) zurückgesendet.

Beim Schreib-Lese-Gerät (SLG) treffen nun auch Datensignale ein, die von fremden oder zu weit beabstandeten mobilen Datenspeichern (MDS) ausgesendet wurden und welche im Schreib-Lese-Gerät (SLG) vom weiteren Signalverarbeitungsprozeß auszuschließen sind.

Vorteilhafterweise werden hierzu Autokorrelationsfunktionen der gesendeten Datensignale des Schreib-Lese-Geräts (SLG) und der empfangenen Datensignale der jeweiligen mobilen Datenspeicher (MDS) gebildet. Wenn die jeweiligen Autokorrelationsfunktionen ein Minimum aufweisen, wird dies im Schreib-Lese-Gerät (SLG) als Anzeichen für eine Phasenverschiebung zwischen den gesendeten Datensignalen des Schreib-Lese-Gerät (SLG) und dem empfangenen Datensignal des jeweiligen mobilen Datenspeichers (MDS) festgestellt und das jeweilige empfangene Datensignal des mobilen Datenspeichers (MDS) wird nicht bei der weiteren Signalverarbeitung berücksichtigt.

Vorteilhafterweise werden Spread-Spectrum-Datensignale zwischen Schreib-Lese-Gerät (SLG) und den mobilen Datenspeichern (MDS) übertragen und ausgetauscht.

Gemäß einer einfachen Verfahrensvariante kann festgestellt werden, ob zwischen den Datensignalen des Schreib-Lese-Geräts(SLG) und den empfangenen Datensignalen des mobilen Datenspeichers (MDS) eine Phasensynchronisation besteht. Diese liegt vor, wenn die Summe der Laufzeiten des Datensignals vom Schreib-Lese-Gerät (SLG) zu einem benachbarten mobilen Datenspeicher (MDS) und einer Bearbeitungszeit t₀ zur Erzeugung des rückzusendenden Datensignals im mobilen Datenspeicher (MDS) und der Laufzeit des rückgesendeten Datensignals vom mobilen Datenspeicher (MDS) zum Schreib-Lese-Gerät (SLG) kürzer ist als die Länge eines Signalchips, also eines Zeitschlitzes im zeitgerasterten Datenstrom aufeinanderfolgender Datensignale des Schreib-Lese-Geräts (SLG).

Wenn nun ein vom mobilen Datenspeicher (MDS) zurückgesendetes Datensignal innerhalb der Summe von Bearbeitungszeit t₀ und der Fangbereichszeit t_{fang} (also der maximalen Übertragungszeit vom Schreib-Lese-Gerät (SLG) zum mobilen Datenspeicher (MDS) und zurück) wieder im Schreib-Lese-Gerät (SLG) empfangen wird, befindet sich das zurückgesendete Datensignal des mobilen Datenspeichers (MDS) innerhalb des vorgegebenen Reichweitenbereichs.

In der schematischen Darstellung gemäß FIG 2 befindet sich das zurückgesendete Datensignal des mobilen Datenspeichers (MDS 4) innerhalb des aus der Summe von t₀ und t_{fang} gebildeten Zeitfensters, während das Datensignal (MDS 1) außerhalb des vorgegebenen Reichweitenbereichs liegt und im Schreib-Lese-Gerät (SLG) aufgrund fehlender Phasensynchronisation nicht mehr weiterverarbeitet wird.

Bei einer Vernachlässigung der Bearbeitungszeit t₀ ergibt sich die maximale zeitliche Chiplänge des Zeitschlitzes im gerasterten Datensignal des Schreib-Lese-Geräts (SLG) aus der Reichweite des Schreib-Lese-Geräts (SLG) zum mobilen Datenspeicher (MDS) und zurück dividiert durch die Ausbreitungsgeschwindigkeit der elektromagnetischen Wellen, also der Lichtgeschwindigkeit.

Entsprechend einer weiteren Verfahrensvariante gemäß den Patentansprüchen 2 - 6, werden vom Schreib-Lese-Gerät (SLG) unmodulierte Datensignale mit laufend veränderter Sendefrequenz (z.B. gemäß einer Sägezahnfunktion) an benachbarte mobile Datenspeicher (MDS) ausgesendet. Derartige von mobilen Datenspeichern (MDS) empfangene Datensignale des Schreib-Lese-Geräts (SLG) werden durch passive Backscatter-Modulation ohne weitere Bearbeitungszeit innerhalb des mobilen Datenspeichers (MDS) an das Schreib-Lese-Gerät (SLG) zurückgesendet.

Im Schreib-Lese-Gerät (SLG) wird die Phase des im mobilen Datenspeicher (MDS) mit einem Hilfsträger modulierten und rückgesendeten Datensignals am Anfang und am Ende eines Zeitschlitzes des gerasterten Datenstroms des Schreib-Lese-Geräts (SLG) festgestellt. Eine ermittelte Phasendifferenz in Bezug zum ausgesendeten Datensignal des Schreib-Lese-Geräts (SLG) ist proportional zum Abstand zwischen dem Schreib-Lese-Gerät (SLG) und dem mobilen Datenspeicher (MDS) dessen rückgesendetes Datensignal empfangen wurde. Diese Phasendifferenzen werden mehrfach ermittelt und dann gemittelt.

Bei einer als Grenzwert im Schreib-Lese-Gerät (SLG) vorgegebenen maximalen Phasendifferenz können rückgesendete Datensignale von mobilen Datenspeichern (MDS), welche diesen Phasengrenzwert überschreiten, von einer weiteren Signalverarbeitung im Schreib-Lese-Gerät (SLG) ausgeschlossen werden.

## Patentansprüche

1. Verfahren zur Datenübertragung zwischen mindestens einem Schreib-Lese-Gerät (SLG) und mindestens einem mobilen Datenspeicher (MDS) in einem Identifikationssystem mit mindestens einem an Objekten angebrachten mobilen Datenspeicher (MDS) zur Erfassung von objektbezogenen Zustands- und/oder Prozeßdaten z.B. in einem Versand-, Transport- und/oder Fertigungssystem der einzelnen Objekte,
**gekennzeichnet durch**
folgende Verfahrensschritte:
a) Aussendung eines Datensignals vom Schreib-Lese-Gerät (SLG) an mindestens einen mobilen Datenspeicher (MDS),
b) Rücksendung eines modulierten Datensignals von mindestens einem mobilen Datenspeicher (MDS) zum Schreib-Lese-Gerät (SLG),
c) Ermittlung des Laufzeitunterschieds zwischen einem empfangenen modulierten Datensignal eines mobilen Datenspeicher (MDS) und dem Datensignal des Schreib-Lese-Geräts (SLG) im Schreib-Lese-Gerät (SLG) sowie
d) Verarbeitung des modulierten Datensignals des mobilen Datenspeichers (MDS) im Schreib-Lese-Gerät (SLG), falls der in Verfahrensschritt c) ermittelte Laufzeitunterschied eine vorgegebene Laufzeitgrenze unterschreitet.

2. Verfahren nach Anspruch 1,
**dadurch gekennzeichnet**, daß vom Schreib-Lese-Gerät (SLG) unmodulierte Datensignale mit laufend veränderter Sendefrequenz an mindestens einen mobilen Datenspeicher (MDS) ausgesendet werden.

3. Verfahren nach Anspruch 1 oder 2;
**dadurch gekennzeichnet**, daß im Schreib-Lese-Gerät (SLG) die Phasenverschiebung zwischen einem empfangenen modulierten Datensignal eines mobilen Datenspeichers (MDS) und dem gesendeten unmodulierten Datensignal des Schreib-Lese-Geräts (SLG) festgestellt wird.

4. Verfahren nach einem der vorhergehenden Ansprüche,
**dadurch gekennzeichnet,** daß die Datenübertragung zwischen dem Schreib-Lese-Gerät (SLG) und dem mobilen Datenspeicher (MDS) in Zeitschlitze (SLOTS) eingeteilt wird.

5. Verfahren nach Anspruch 4,
**dadurch gekennzeichnet,** daß die Aussendung eines Datensignals vom Schreib-Lese-Gerät (SLG) an mindestens einen mobilen Datenspeicher (MDS) in einem bestimmten Zeitschlitz (SLOT) erfolgt.

6. Verfahren nach einem der vorhergehenden Ansprüche,
**dadurch gekennzeichnet,** daß die Rücksendung eines modulierten Datensignals von mindestens einem mobilen Datenspeicher (MDS) zum Schreib-Lese-Gerät (SLG) durch passive Backscattermodulation des unmodulierten Datensignals des Schreib-Lese-Geräts (SLG) erfolgt.

7. Verfahren Anspruch 1,
**dadurch gekennzeichnet,** daß vom Schreib-Lese-Gerät (SLG) ein moduliertes Datensignal an mindestens einen mobilen Datenspeicher (MDS) ausgesendet wird.

8. Verfahren nach Anspruch 7,
**dadurch gekennzeichnet,** daß vom Schreib-Lese-Gerät (SLG) ein Spread-Spectrum-Datensignal an mindestens einen mobilen Datenspeicher (MDS) ausgesendet wird.

9. Verfahren nach Anspruch 8,
**dadurch gekennzeichnet,** daß von mindestens einem mobilen Datenspeicher (MDS) ein Spread-Spectrum-Datensignal empfangen und zurück an das Schreib-Lese-Gerät (SLG) gesendet wird.

10. Verfahren nach einem der Ansprüche 7 - 9,
**dadurch gekennzeichnet,** daß im Schreib-Lese-Gerät (SLG) Autokorrelationsfunktionen der gesendeten Datensignale des Schreib-Lese-Geräts (SLG) und der empfangenen Datensignale des mobilen Datenspeichers (MDS) gebildet werden.
